# EUROPÄISCHE PATENTANMELDUNG

(11) **EP 2 012 468 A2**
(43) Veröffentlichungstag der Anmeldung: **07.01.2009**
(21) Anmeldenummer: 08405155.6
(22) Anmeldetag: 11.06.2008
(51) Int. Cl.: H04L 12/28

(54) **Szenen-Detektion**

(30) Priorität: 19.06.2007 CH 9782007
(71) Anmelder: Adhoco AG, CH-8406 Winterthur (CH)
(72) Erfinder: Schumann Thomas, CH-9043 Trogen (CH); Guillemin Antoine, CH-1303 Penthaz (CH)
(74) Vertreter: Roshardt, Werner Alfred

(57) **Zusammenfassung**

Die Erfindung betrifft ein Verfahren zur Steuerung von haustechnischen Einrichtungen, welche zur gesteuerten Aktivierung jeweils mit einem Steuerelement (12.1, 60) versehen sind, wobei eine oder mehrere der haustechnischen Einrichtungen an ein Versorgungsnetz (8, 61) angeschlossene Verbraucher (4.1, 15, 51, 52) umfassen. Eine zentrale Kontrolleinheit (21, 53) registriert bzw. erlernt von einem Benutzer gewählte Regelstellungen der Steuerelemente (12.1, 60) und speichert diese als Szene. Die gespeicherten Regelstellungen können bei Bedarf wieder abgerufen und die Steuerelemente (12.1, 60) der haustechnischen Einrichtungen entsprechend geregelt werden. Das Verfahren ist gekennzeichnet, durch eine Überwachung von Aktivierungszuständen eines oder mehrerer der Verbraucher (15, 51) durch jeweils einen Aktivitätsdetektor (23, 56) sowie eine Zuordnung von szenentypischen Aktivierungszuständen von einem oder mehreren überwachten typischen Verbrauchern zu einer gespeicherten Szene. Dabei werden bei einer Detektierung der szenentypischen Aktivierungszustände der typischen Verbraucher der Szene die gespeicherten Regelstellungen automatisch abgerufen und die betroffenen Steuerelemente (12.1, 60) der haustechnischen Einrichtungen entsprechend geregelt. Weiter beschreibt die Erfindung eine Anordnung für ein Heim- und Gebäudeautomationssystem (50) zur Durchführung des erfindungsgemässen Verfahrens.

## Beschreibung

### Technisches Gebiet

Die Erfindung betrifft ein Verfahren zur Steuerung von haustechnischen Einrichtungen, welche zur Regelung einer Aktivierung jeweils mit einem Steuerelement versehen sind, wobei eine oder mehrere der haustechnischen Einrichtungen an ein Versorgungsnetz angeschlossene Verbraucher umfassen und von einem Benutzer gewählte Regelstellungen der Steuerelemente der haustechnischen Einrichtungen von einer zentralen Kontrolleinheit registriert bzw. erlernt und als Szene gespeichert werden, die Regelstellungen bei Bedarf wieder abgerufen und die Steuerelemente entsprechend geregelt werden.

### Stand der Technik

Für das Ein- und Ausschalten, sowie das Steuern und Regeln von haustechnischen Einrichtungen wie elektrischen Verbrauchern in Eigenheimen oder anderen Gebäuden sind zahlreiche Ausführungsformen der Verkabelung und der Bedienung auf dem Markt. Üblicherweise werden an einem oder mehreren gut zugänglichen Orten Bedienelemente wie beispielsweise Kippschalter, Ein-/Aus-Druckschalter, Drehregler oder monostabile Taster montiert, die mit einer geeigneten Verkabelung dafür sorgen, dass Stromkreise geöffnet und geschlossen werden können, z. B. zum Ein- und Ausschalten einer Beleuchtung, und Geräte bedient werden können (z. B. Aktivierungsstufen eines Ventilators). Zur Vereinfachung und Komfortsteigerung werden unter dem Begriff "Szenenschaltung" gewisse Verbraucher zu so genannten "Szenen" zusammengefasst, welche durch ein einziges Bedienelement manuell abgerufen werden können, wie dies z. B. bei US 4,924,151 (Lutron Electronics Co., Ic.)oder WO 2001/50684 (C-Smart LLC) beschrieben wird. Für jede Szene ist in der Regel ein separates Bedienelement erforderlich. Ein Bedienelement ist im einfachsten Fall ein Taster. Es gibt heute unter dem Stichwort "intelligentes Wohnen" auch aufwändigere Bedientableaus mit grafischen, z. B. menugeführten Bedienhilfen und Touch-Panel-Eingabehilfen. Alle diese Installationstechniken sind bewährt, bedingen neben dem Erfordernis für manuelle Bedieneinheiten aber einen grossen Verkabelungsaufwand (bei herkömmlicher Verkabelung) oder einen grossen Programmier- und Konfigurationsaufwand (bei BUS-gesteuerten Systemen).

Typische Szenen sind beispielsweise "Kochen", "Fernsehen", "Büroarbeit", "Party". Szenen zeichnen sich dadurch aus, dass sie häufig wiederkehrende Situationen darstellen, die eine bestimmte Einstellung von haustechnischen Einrichtungen (Elemente zur Beleuchtung, Beschattung, Heizung, Lüftung des Wohnraums) erfordern. Bei bekannten Installationslösungen werden die für die jeweilige Szene gewünschten Einstellungen der haustechnischen Einrichtung durch einen Bewohner bzw. Benutzer bei Bedarf aktiviert, indem der Bewohner auf mindestens eine Bedienstelle einwirkt. Die haustechnischen Einrichtungen werden dann gemäss einer in der Installation implementierten Szenenlogik angesteuert. Damit ergibt sich der Nachteil, dass ein Bewohner eine Bedieneinheit aufsuchen muss, um eine Szene auswählen zu können. Damit ist eine Vielzahl von Bedieneinheiten erforderlich, um im gesamten Bereich des Heim- und Gebäudeautomationssystems eine gute Bedienbarkeit zu gewährleisten. Fernbedienungen schaffen zwar eine gewisse Abhilfe, aber auch in diesem Fall müssen die Szenen nach wie vor manuell aktiviert werden.

### Darstellung der Erfindung

Aufgabe der Erfindung ist es daher, ein dem eingangs genannten technischen Gebiet zugehörendes Verfahren sowie eine Anordnung zur Durchführung des Verfahrens zu schaffen, welche eine verbesserte und komfortablere Szenenwahl ermöglichen.

Die Lösung der Aufgabe ist durch die Merkmale der Ansprüche 1 und 7 definiert. Gemäss Anspruch 1 stellt die Erfindung ein Verfahren zur Steuerung von haustechnischen Einrichtungen bereit. Die haustechnischen Einrichtungen sind zur geregelten Aktivierung jeweils mit einem Steuerelement versehen und weisen einen oder mehrere an ein Versorgungsnetz angeschlossene Verbraucher auf. Zur Steuerung werden von einem Benutzer gewählte Regelstellungen der Steuerelemente von einer zentralen Kontrolleinheit registriert bzw. erlernt und als Szene gespeichert, wobei die Regelstellungen bei Bedarf wieder abgerufen und die Steuerelemente der Einrichtungen entsprechend geregelt werden. Erfindungsgemäss werden dabei Aktivierungszustände eines oder mehrerer der Verbraucher durch jeweils einen Aktivitätsdetektor überwacht. Weiter werden szenentypische Aktivierungszustände von einem oder mehreren überwachten szenentypischen Verbrauchern einer gespeicherten Szene zugeordnet. Bei einer Detektierung der szenentypischen Aktivierungszustände der szenentypischen Verbraucher werden die zur Szene gehörigen gespeicherten Regelstellungen automatisch abgerufen und die betroffenen Steuerelemente der haustechnischen Einrichtungen entsprechend geregelt.

Die Erfindung stellt somit ein Verfahren bereit, welches eine automatische Erkennung von Szenen erlaubt und gemäss welchem gewünschte Einstellungen haustechnischer Einrichtungen automatisch, d. h. ohne Einwirkung des Bewohners, richtig vorgenommen und - wenn die Szene wechselt -gemäss den Einstellungen der neuen Szene geändert werden.

Sämtliche der im Folgenden im Zusammenhang mit dem Verfahren beschriebenen technischen Ausbildungen von Komponenten des Heim- oder Gebäudeautomationssystems können auch, unabhängig von dem erfindungsgemässen Verfahren, als mögliche Ausführungen auf die erfindungsgemässen Anordnungen übertragen werden. Umgekehrt sind auch im Zusammenhang mit der Anordnung beschriebene Verfahrensschritte dem erfindungsgemässen Verfahren zugehörig.

Erfindungsgemäss sind die für die Szene zu regelnden haustechnischen Einrichtungen über eine Heim- oder Gebäudeautomationszentrale, bzw. allgemein eine zentrale Kontrolleinheit gesteuert. Als haustechnische Einrichtungen gelten beispielsweise Lichtquellen, Heizungen, Kücheneinrichtungen wie Herd, Dunstabzug oder Ventilator, aber auch TV-Geräte, Computer oder andere elektrische Verbraucher. Es ist aber auch denkbar, z. B. Heizungen oder Warmwasser-Boiler sowie Wasser- oder Gaszufluss über die Kontrolleinheit zu steuern. Weiter können auch Storen bzw. Vorhänge oder andere Sichtblenden durch die Kontrolleinheit gesteuert werden und z. B. zur Verdunklung eines Zimmers aktiviert werden.

Die jeweiligen haustechnischen Einrichtungen sind dabei mit Steuerelementen versehen, welche eine Regelung einer Aktivierung der jeweiligen Einrichtung erlaubt. Die Steuerelemente können dabei z. B. gemäss den in der EP 1 734 636 A2 (Adhoco AG) beschriebenen Schaltdosen ausgeführt sein und im Gebäude installiert werden. Es ist aber auch denkbar, die Steuerelemente als externe und weitgehend selbständige Einheiten vorzusehen, welche zwischen Verbraucher und einer Steckdose des Versorgungsnetzes angeordnet werden, z. B. als Zwischenstecker oder als Zwischenkabel. Die Steuerelemente sind dabei bevorzugt mit einer lokalen Intelligenz derart ausgestattet, dass ein gegenwärtiger Schalt-/Regelzustand bzw. ein von einem Benutzer manuell ausgelöster Regel- bzw. Schaltvorgang über ein Kommunikationssystem an die Kontrolleinheit übermittelt und von dieser erkannt werden kann und umgekehrt aufgrund eines Steuer-Signals der Kontrolleinheit ein Schalt- bzw. Regelvorgang ausgelöst werden kann. Der besseren Übersichtlichkeit halber werden hier und im Folgenden unter Regelvorgang sowohl kontinuierliche Veränderungen eines Aktivierungszustandes wie z. B. beim Dimmen von Licht als auch binäre Schaltvorgänge wie das Ein-/Ausschalten eines Verbrauchers verstanden.

Die Heim- oder Gebäudeautomationszentrale bzw. die zentrale Kontrolleinheit ist bevorzugt gemäss einem System wie in der EP 0 900 417 B1 (HTS High Technology Systems AG) ausgeführt. Eine derartige Kontrolleinheit erkennt, erlernt und speichert selbständig die von den Bewohnern vorgenommenen bzw. bei dieser Szene gewünschten Einstellungen der haustechnischen Einrichtungen. Das Erkennen und Erlernen der bevorzugten Einstellungen der haustechnischen Einrichtungen erfolgt bevorzugt durch eine z. B. aufgrund neuronaler Netzwerktechnik erreichte Lernfähigkeit der zentralen Kontrolleinheit. Weiter können die Regelstellungen der Steuerelemente der haustechnischen Einrichtungen einer abgespeicherten Szene bei Bedarf wieder abgerufen werden (Szenenwahl) und die haustechnischen Einrichtungen bzw. deren Steuerelemente entsprechend geregelt werden. Bei herkömmlichen Systemen erfolgt die Szenenwahl manuell, d. h. durch eine Benutzerinteraktion mit der Kontrolleinheit bzw. über an die Kontrolleinheit angeschlossene Bedieneiemente bzw. eine Fernbedienung. Derartige Bedienelemente, sowie Bedienelemente zur Aktivierung einer haustechnischen Einrichtung, können auch weiterhin bei einer erfindungsgemässen Kontrolleinheit vorgesehen sein. Die Erfindung geht jedoch neue Wege, in dem eine manuelle Szenenwahl nicht mehr erforderlich ist und automatisch erfolgt, d. h. die Auswahl der Szene selbstständig durch die Kontrolleinheit ohne direkte Benutzerinteraktion vorgenommen wird.

Für die automatische Szenenwahl wird erfindungsgemäss eine Aktivität einer Anzahl von Verbrauchern der haustechnischen Einrichtungen überwacht. Dabei können beispielsweise nur einer oder alle sowie auch eine beliebige Teilmenge der Verbraucher überwacht werden. Den überwachten Verbrauchern wird hierfür jeweils ein Aktivitätsdetektor zugeordnet, welcher einen Verbrauch des jeweiligen Verbrauchers messen kann, bzw. aufgrund eines Verbrauchs erkennen kann, ob ein Verbraucher ein- bzw. um- oder ausgeschalten wird. Insbesondere kann der Aktivitätsdetektor einen Aktivierungszustand des Verbrauchers feststellen, welcher sich auf die binären Zustände "ein" oder "aus" beschränkt. Es können aber auch kontinuierliche Abstufungen einer Aktivierung wie das beim Dimmen von Licht überwacht und gegebenenfalls einer Szene als typischer Aktivierungszustand eines typischen Verbrauchers zugeordnet werden. Die Überwachung erfolgt bevorzugt durch die zentrale Kontrolleinheit, an welche die Aktivitätsdetektoren beispielsweise über das Kommunikationssystem angebunden sind. Es ist hierbei z. B. denkbar, dass die Kontrolleinheit periodisch durch so genanntes "polling" den Status der Aktivitätsdetektoren bzw. der jeweiligen Verbraucher abfragt. Bevorzugt sind aber Ausführungsformen, in welchen die Aktivitätsdetektoren selbständig ein Signal senden, sobald sich eine Änderung im Aktivierungszustand der Verbraucher ergibt. Weitere denkbare Ausführungen umfassen laufende, d. h. beispielsweise mit einer gewissen Frequenz auftretende, Meldungen des Aktivitätszustandes der überwachten Verbraucher durch die Aktivitätsdetektoren.

Detektiert ein Aktivitätsdetektor, dass der entsprechende Verbraucher aktiviert oder deaktiviert wurde bzw. sich ein Aktivierungszustand des Verbrauchers geändert hat, so wird diese Information über das Kommunikationssystem an die Kontrolleinheit übermittelt. Handelt es sich bei den aktivierten Verbrauchern um Verbraucher, welcher als typisch für eine Szene definiert sind, so ruft die Kontrolleinheit automatisch die abgespeicherten Einstellungen der zugehörigen Szene ab und löst die entsprechenden Regelung bzw. Schaltvorgänge in den Steuerelementen der haushaltstechnischen Einrichtungen aus. Als szenentypisch sind hierbei Verbraucher zu verstehen, welche für eine gewisse Szene z. B. unbedingt erforderlich, bzw. mit einer hohen Wahrscheinlichkeit bei einer bestimmten Szene aktiviert sind. Bei einer möglichen Szene "Kochen" ist z. B. zu erwarten, dass eine Kochstelle bzw. ein Herd aktiviert wird. Die Kochstelle kann somit als typischer Verbraucher der Szene "Kochen" zugeordnet werden und ein zugehöriger szenentypischer Aktivierungszustand ist "aktiviert". Ebenso ist die Aktivierung eines TV-Geräts für eine zugehörige Szene "Fernsehen" oder das Einschalten eines Computers für die Szene "Büroarbeit" typisch. Wird die Kochstelle bzw. der Fernseher aktiviert, so wird der jeweilige Aktivierungszustand des Verbrauchers als typisch für die entsprechende Szene erkannt und die entsprechende Szene ausgelöst. Typische Verbraucher mit zugehörigen szenentypischen Aktivierungszuständen können für eine Vielzahl von Szenen identifiziert werden und bieten daher ein weit reichendes und verlässliches Kriterium für eine Szenenwahl.

Für die automatische Szenenwahl werden erfindungsgemäss einer oder mehrere der überwachten Verbraucher der haustechnischen Einrichtungen als typischer Verbraucher einer Szene zugeordnet. Damit verbunden ist die Zuordnung von szenentypischen Aktivierungszuständen der typischen Verbraucher. Die Aktivierungszustände der typischen Verbraucher können dabei komplexen Aktivierungsmustern entsprechen, wodurch eine grosse Vielseitigkeit der Kriterien zur Szenenauswahl erreicht wird. Beispielsweise können einer gegebenen Szene drei typische Verbraucher A, B, C mit szenentypischen Aktivierungszuständen A "aktiviert", B - "deaktiviert" und C - "aktiviert" zugeordnet werden. Erfindungsgemäss wird in diesem Fall die zugeordnete gespeicherte Szene abgerufen und die entsprechenden Regelstellungen der Steuerelemente ausgelöst, wenn die typischen Verbraucher A, B und C gemäss diesem Schema aktiviert bzw. deaktiviert worden sind. Es versteht sich, dass auch Verfahren mit der Szenen-Zuordnung eine beliebige Anzahl typischer Verbraucher mit szenentypischen Aktivierungsmustern beliebiger Komplexität im Rahmen der Erfindung liegen.

Es ist aber zur besseren Übersichtlichkeit und zur einfacheren Zuordnung bevorzugt, dass einer Szene genau ein typischer Verbraucher mit szenentypischem Aktivierungszustand zugeordnet wird, wie beispielsweise in den oben beschriebenen Beispielen "Fernsehen" bzw. "Kochen". Eine gespeichert Szene wird dann abgerufen, wenn der genau eine zugeordnete typische Verbraucher in den szenentypischen Aktivitätszustand gebracht wird. Durch diese einfache Zuordnung ergibt sich ein eindeutiges und klares Kriterium für die Erkennung und Auswahl bzw. den Abruf und die Aktivierung einer gespeicherten Szene.

Die Zuordnung kann erfindungsgemäss automatisch erfolgen. Die Kontrolleinheit identifiziert in diesem Fall selbstständig in den überwachten Verbrauchern aufgrund deren Aktivierungszustände typische Verbraucher einer Szene und ordnet diese zusammen mit den Aktivierungszuständen automatisch der aktuellen Szene als szenentypisch zu. Eine derartige Steuerung bzw. Erkennung kann für gewisse Anforderungen eine bevorzugte Variante des erfindungsgemässen Verfahrens darstellen.

Vorzugsweise werden jedoch bei dem erfindungsgemässen Verfahren typische Verbraucher einer Szene mit zugehörigen szenentypischen Aktivierungszuständen manuell vorgegeben bzw. fix programmiert. Das Erkennen und/oder Erlernen einer Szene wird damit besonders vereinfacht, indem die zentrale Kontrolleinheit die für die Szene typischen Verbraucher als Referenz verwenden kann. Die Kontrolleinheit erlernt während des Betriebs der typischen Verbraucher die vom Benutzer vorgenommenen Einstellungen und erkennt aufgrund der szenentypischen Aktivierungszustände der typischen Verbraucher, dass die vorgenommenen Einstellungen zu der aktuellen Szene gehören. Mit dem erfindungsgemässen Verfahren ist somit auch eine parallele Verwendung von erlernten und fix programmierten Szenen möglich. Es ist z. B. denkbar, dass die Einstellungen gewisser haustechnischer Einrichtungen für eine Szene fix, d. h. vom Lernprozess nicht veränderbar, vorgegeben sein können, während die Einstellungen anderer zur selben Szene gehöriger haustechnischer Einrichtungen auf bekannte bzw. oben beschriebene Art erlernt werden. Die fix vorgegebenen Einstellungen können dann z. B. manuell durch einen Benutzer bzw.

Techniker programmiert werden, während die zugehörigen erlernten Einstellungen von der Kontrolleinheit selbstständig angepasst werden können. Es ist somit eine Koexistenz von fix programmierten und erlernten Szenen bzw. Teilszenen möglich, welche erst durch die erfindungsgemässe Identifikation eines typischen Verbrauchers einer Szene als Referenz ermöglicht wird.

Grundsätzlich ist es nicht erforderlich, dass alle Szenen einen typischen Verbraucher aufweisen. Es sind durchaus auch Szenen denkbar, bei welchen keine typischen Verbraucher zugeordnet sind und welche nach wie vor z. B. manuell gewählt bzw. aktiviert werden müssen. Denkbar sind hierbei beispielsweise Szenen, welche zu fixen wiederkehrenden Zeitpunkten aktiviert werden. Um die Vorzüge der erfindungsgemässen automatischen Szenenwahl aber in grösstmöglichen Umfang ausschöpfen zu können, ist vorzugsweise möglichst jeder gespeicherten Szene wenigstens ein typischer Verbraucher mit szenentypischem Aktivierungszustand zuzuordnen. Insbesondere ist dabei jeder wählbaren gespeicherten Szene ein typischer Verbraucher zugeordnet, d. h. jeder Szene, deren Abruf und Aktivierung nicht fix vorgegeben ist und bei herkömmlichen Systemen durch den Benutzer vorgenommen wird. Mit der Zuordnung von einem typischen Verbraucher mit zugehörigem szenentypischen Aktivierungszustand für jede wählbare gespeicherte Szene ermöglicht die Erfindung eine weitgehend automatisierte Szenenwahl für im Wesentlichen sämtliche der gespeicherten Szenen. Es bedarf somit keiner direkten Interaktion des Benutzers mit der Kontrolleinheit resp. mit einem an die Kontrolleinheit angebunden Bedienelement, um eine Szene abzurufen oder die aktuelle Szene zu wechseln.

Die überwachten Verbraucher umfassen vorzugsweise elektrische Verbraucher, welche durch das Versorgungsnetz bereitgestellten elektrischen Strom bzw. eine elektrische Leistung verbrauchen. Die Überwachung der Aktivität eines Verbrauchers erfolgt in diesem Fall bevorzugt durch Messung des elektrischen Stroms um eine elektrische Leistungsaufnahme des jeweiligen Verbrauchers zu erkennen. Die Aktivitätsdetektoren sind zur Durchführung der Überwachung derart ausgebildet, dass sie eine elektrische Leistungsaufnahme durch den entsprechenden Verbraucher messen bzw. feststellen können. Bevorzugt umfasst der Aktivitätsdetektor hierzu einen Sensor, welcher den Stromfluss misst. Eine allfällige für den Betrieb der Aktivitätsdetektoren erforderliche Energie kann in diesem Falle direkt mit einer Stromversorgung aus dem Versorgungsnetz realisiert werden.

Ein überwachter Verbraucher kann aber beispielsweise auch ein Wasserverbraucher oder ein Gasverbraucher sein. Die Überwachung der Aktivität des Verbrauchers umfasst in diesem Fall die Messung einer Durchflussmenge von Wasser bzw. von Gas. Der Aktivitätsdetektor ist dann ein einfacher Durchflussmesser, welcher z. B. die Betätigung einer Dusche bzw. eines Gasherdes aufgrund des Wasser- bzw. Gasdurchflusses misst. Für eine mögliche Szene "Duschen" wäre dann ein typischer Verbraucher z. B. der Duschhahn, bei dessen Aktivierung die entsprechende gespeicherte Szene abgerufen wird. Entsprechend wäre für eine Szene "Kochen" der Gasherd ein typischer Verbraucher. Das zugehörige Versorgungsnetz ist dann z. B. ein im Gebäude installiertes Wasserversorgungssystem oder eine Gasleitung.

Während eine Überwachung andersartiger, d. h. nicht elektrischer, Verbraucher in gewissen Fällen durchaus eine bevorzugte Abwandlung des erfindungsgemässen Verfahrens darstellen kann, ist aufgrund der grösseren Auswahl möglicher elektrischer Verbraucher in z. B. einem Haushalt bei einer Überwachung von elektrischen Verbrauchern eine grössere Vielseitigkeit gewährleistet. Es ist aber durchaus denkbar, dass bei dem erfindungsgemässen Verfahren eine parallele Anwendung von Aktivitätsdetektoren zur Überwachung von einerseits elektrischen Verbrauchern und andererseits von andersartigen Verbrauchern in derselben Anordnung bevorzugt ist. Das Verfahren umfasst in diesem Fall parallel die Überwachung von elektrischen als auch von andersartigen Verbrauchern.

Viele der heutigen elektrischen Verbraucher beispielsweise aus der Unterhaltungselektronik (Fernseher), Büro-Informatik-Geräte (PC, Bildschirm, Drucker) und Küchengeräte (Kaffeemaschine) weisen einen so genannten Standby-Betrieb auf. Im Standby-Betrieb ist das Gerät zwar weitgehend ausgeschaltet, weist aber eine gewisse Grundaktivität auf, um im Falle des Einschaltens z. B. schneller betriebsbereit zu sein. Wie sich gezeigt hat, stellen Geräte im Standby-Betrieb einen der grössten Verbraucher von elektrischer Energie in z. B. Haushalten dar. Das erfindungsgemässe Verfahren sieht daher bevorzugt vor, bei Nichtaktivierung eines überwachten Verbrauchers während eines durch einen Benutzer vorgebbaren oder durch die Kontrolleinheit registrierten bzw. erlernten Zeitraums den Verbraucher vom Versorgungsnetz zu trennen.

In einer vorteilhaften Ausführungsform weisen die Aktivitätsdetektoren daher zusätzliche Leistungsschalter (z. B. Relais) auf oder sind mit derartigen Bauteilen gekoppelt. Damit wird ermöglicht, den für die Szene typischen Verbraucher bei längerer Nichtbenutzung ganz vom Versorgungsnetz zu trennen, um den Energieverbrauch im Standby-Betrieb zu senken bzw. zu eliminieren. Die Nichtaktivierung wird dabei bevorzugt von den Aktivitätsdetektoren bzw. von deren Sensoren gemessen. Es ist dabei z. B. denkbar, dass der Aktivitätsdetektor mit einer lokalen Intelligenz versehen ist, welche es ihm erlaubt, die Nichtaktivität des Verbrauchers während eines vorgegebenen Zeitraums festzustellen und gegebenenfalls den Verbraucher durch die Leistungsschalter vom Versorgungsnetz zu trennen. Eine Kommunikation mit der Kontrolleinheit ist in diesem Fall nicht erforderlich. Es ist aber durchaus denkbar, dass die Zeiträume für eine Trennung vom Versorgungsnetz für die verschiedenen überwachten Verbraucher zentral in der Kontrolleinheit gesteuert werden und die Leistungsunterbrecher der Aktivitätsdetektoren von der Kontrolleinheit gesteuert werden. Die für den jeweiligen Verbraucher möglicherweise spezifischen Zeiträume einer für eine Abschaltung relevanten Nichtaktivität können z. B. von der Kontrolleinheit auf der Basis der Häufigkeit der Aktivierung eines Verbrauchers durch einen Benutzer erlernt oder manuell vorgegeben werden.

Gemäss Anspruch 7 stellt die Erfindung zur Lösung der erfindungsgemässen Aufgabe eine Anordnung für ein Heim- und Gebäudeautomationssystem bereit, welche insbesondere zur Durchführung des oben beschriebenen erfindungsgemässen Verfahrens geeignet ist. Die Anordnung umfasst eine Kontrolleinheit, ein Kommunikationssystem und haustechnische Einrichtungen, wobei die haustechnischen Einrichtungen zur gesteuerten Aktivierung mit Steuerelementen versehen sind und eine oder mehrere der haustechnischen Einrichtungen an ein Versorgungsnetz angeschlossene Verbraucher aufweisen. Die Steuerelemente sind dabei über das Kommunikationssystem an die Kontrolleinheit angebunden. Die Kontrolleinheit, das Kommunikationssystem und die haustechnischen Einrichtungen sind derart ausgebildet und wirken derart zusammen, dass die Kontrolleinheit von einem Benutzer gewählte Regelstellungen der Steuerelemente der haustechnischen Einrichtungen registrieren bzw. erlernen und als Szene speichern kann. Die Kontrolleinheit ist derart ausgebildet, dass sie die Regelstellungen einer gespeicherten Szene bei Bedarf wieder abrufen und die Steuerelemente der haustechnischen Einrichtungen entsprechend regeln kann. Erfindungsgemäss zeichnet sich die Anordnung durch Aktivitätsdetektoren aus, welche einem oder mehreren der Verbraucher zu deren Überwachung zugeordnet sind. Die Aktivitätsdetektoren sind dabei über das Kommunikationssystem an die Kontrolleinheit angebunden.

Durch die Überwachung von Verbrauchern mit Aktivitätsdetektoren und deren Anbindung an die Kontrolleinheit wird erreicht, dass die Kontrolleinheit laufend über einen Aktivitätszustand der überwachten Verbraucher informiert ist bzw. informiert werden kann. Die Aktivitätsdetektoren sind derart ausgebildet, dass sie erkennen, dass der zugehörige Verbraucher in Betrieb genommen wird, und dies der Heim- oder Gebäudeautomationszentrale melden können.

Um bei der Durchführung des erfindungsgemässen Verfahrens eine Kommunikation zwischen Steuerelementen der haustechnischen Einrichtungen und der zentralen Kontrolleinheit zu ermöglichen, ist ein Kommunikationssystem vorgesehen. Das Kommunikationssystem umfasst dabei bevorzugt ein kabelloses Funk-Netzwerk oder ein Powerline-Netzwerk; die Kommunikation kann aber in anderen Ausführungen auch über konventionelle Steuer-oder BUS-Kabel erfolgen. Das Kommunikationssystem ermöglicht aber nicht nur die Kommunikation zwischen den Steuerelementen und der zentralen Kontrolleinheit, sondern es können auch andere Komponenten wie möglicherweise vorhandene Sensoren, z. B. Bewegungssensoren, Rauchmelder oder Thermostaten, oder aber auch Bedieneinheiten oder die unten beschriebenen Aktivitätsdetektoren über das Kommunikationssystem mit anderen Komponenten des Gebäudesystems vernetzt werden.

Um die Anordnung zu vereinfachen, erfolgt die Kommunikation zwischen dem Aktivitätsdetektor einerseits und der Zentrale und der daran angeschlossenen haustechnischen Einrichtungen andererseits bevorzugt über dasselbe Kommunikationssystem, über welches auch die Sensoren bzw. Steuerelemente oder Schaltvorrichtungen an die zentrale Kontrolleinheit angebunden sind.

Weiter ist die Kontrolleinheit bevorzugt derart ausgebildet, dass bei Änderungen der Aktivierungszustände der überwachten Verbraucher automatisch festgestellt wird, ob die geänderten Aktivierungszustände szenentypischen Aktivierungszuständen typischer Verbraucher einer gespeicherten Szene entsprechen. Die Kontrolleinheit ist weiter derart ausgebildet, dass sie automatisch die gespeicherten Regelstellungen der entsprechenden Szene abrufen und über das Kommunikationssystem die Steuerelemente der haustechnischen Einrichtungen entsprechend regeln kann, sofern festgestellt wird, dass die typischen Verbraucher der Szene szenentypische Aktivierungszustände aufweisen.

In einer bevorzugten Ausführungsform ist die Heim- oder Gebäudeautomationszentrale bzw. die Kontrolleinheit als ein System gemäss der eingangs erwähnten EP 0 900 417 ausgeführt. Das Erkennen und Erlernen der bevorzugten Einstellungen der haustechnischen Einrichtungen erfolgt dabei durch eine z. B. aufgrund neuronaler Netzwerktechnik lernfähige zentrale Kontrolleinheit. Eine solche Kontrolleinheit erkennt und erlernt die während des Betriebs des typischen Verbrauchers von den Bewohnern vorgenommenen Regelstellungen der für die Szene wichtigen haustechnischen Einrichtungen bzw. der zugehörigen Steuerelemente.

Während die Aktivitätsdetektoren auf verschiedene Arten ausgeführt sein können, ist eine bevorzugte Ausführungsform derart ausgebildet, dass der Aktivitätsdetektor zwischen einem Anschluss des Versorgungsnetzes und dem Verbraucher installiert werden kann. Es sind hierzu z. B. Ausführungen in Form eines Zwischensteckers mit einem Stecker und einer Buchse denkbar, wobei der Stecker z. B. in eine Wandsteckdose des Versorgungsnetzes eingesteckt und ein Anschluss des Verbrauchers mit der Buchse verbunden werden kann. Andere denkbare Ausführungen können z. B. eine Steckerleiste sein oder aber auch Ausführungsformen als Einbaumodule, welche z. B. als Schalt- bzw. Wanddose fix installiert werden können. Derartige Ausführungsformen sind bevorzugt, da keine Manipulationen oder bauliche Massnahmen am Verbraucher erforderlich sind. Jeder Verbraucher kann auf einfache Art mit dem Aktivitätsdetektor versehen werden, einfach indem der Zwischenstecker bzw. die entsprechende Ausführungsform zwischen Versorgungsnetz und Verbraucher geschaltet wird.

Weitere mögliche Ausführungen betreffen Nachrüstsätze, mit welchen die jeweiligen Verbraucher versehen werden können. Nachrüstsätze haben zwar den Vorteil, dass die Aktivitätsdetektoren z. B. an die Elektronik der Verbraucher angebunden werden können. Interaktionen des Benutzers mit dem Verbraucher können in diesem Fall beispielsweise direkt an die Aktivitätsdetektoren weitergeleitet werden. Nachteilig ist aber der bauliche Aufwand, den Aktivitätsdetektor in den Verbraucher einzubauen und an die von Verbraucher zu Verbraucher variierende Elektronik anzuschliessen.

Handelt es sich bei einem überwachten Verbraucher um einen nicht elektrischen Verbraucher wie z. B. einen Wasser- oder Gasverbraucher, so kann der Aktivitätsdetektor als Armatur ausgebildet sein, welche z. B. zwischen Wasser- bzw. Gashahn und das entsprechende Versorgungsnetz geschaltet werden kann.

Die Aktivitätsdetektoren weisen bevorzugt eine gewisse lokale Intelligenz auf, welche es ermöglicht, die gemessene Aktivität z. B. fallabhängig weiterzuleiten oder einfache Massnahmen direkt ohne Rücksprache mit der Kontrolleinheit zu veranlassen. Bevorzugt ist daher jeweils eine programmierbare Logikeinheit in die Aktivitätsdetektoren integriert, welche aufgrund einer Programmierung die gewünschte lokale Intelligenz aufweist. Je nach Anforderung können die Logikeinheiten bzw. die Aktivitätsdetektoren mit einem anderen Mass an Intelligenz versehen werden, wodurch das Gebäudeautomationssystem vielseitig anwendbar ist.

Alternativ können die Aktivitätsdetektoren auch ohne wesentliche Logikeinheit ausgebildet sein. Die Aktivitätsdetektoren übermitteln in diesem Fall z. B. nur gemessenen Aktivitäten ohne vorgängige Aufbereitung. Eine derartige Ausführung der Aktivitätsdetektoren ist hat aber den Nachteil, dass ohne vorgängige Aufbereitung und/oder Interpretation der gemessenen Daten z. B. der Netzwerkverkehr sowie die zentrale Kontrolleinheit stärker belastet werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen schematisch:
Fig. 1 eine konventionelle Anordnung aus dem Stand der Technik mit zwei Bedienelementen zur Ansteuerung von zwei vorprogrammierten Szenen;
Fig. 2 eine erfindungsgemässe Anordnung, wobei die Kommunikation verschiedener Komponenten der Anordnung über ein BUS-System erfolgt;
Fig. 3 eine der Anordnung der Fig. 2 entsprechende Ausführung einer erfindungsgemässen Anordnung, wobei die Kommunikation über ein drahtloses Funknetzwerk erfolgt;
Fig. 4 eine Ansicht eines Aktivitätsdetektors mit integriertem Leistungsschalter bzw. Stromunterbrecher zur Trennung eines überwachten Verbrauchers von einem Versorgungsnetz;
Fig. 5 eine Ansicht einer Installation einer erfindungsgemässen Anordnung in einem Gebäude.

Grundsätzlich sind in den Figuren gleiche Teile mit gleichen Bezugszeichen versehen.

### Wege zur Ausführung der Erfindung

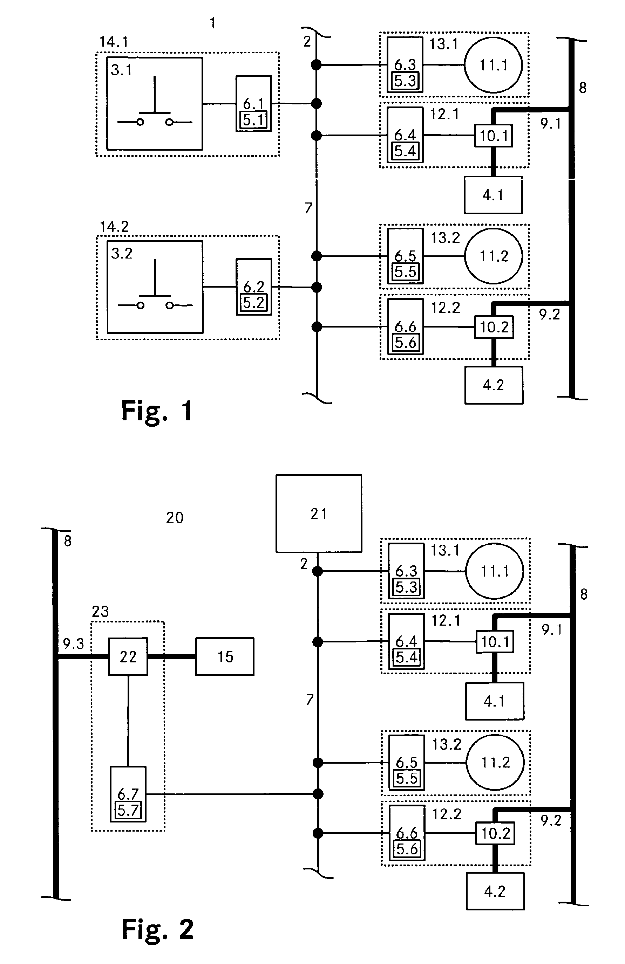

In Fig. 1 ist ein Ausschnitt einer konventionellen dezentralen Anordnung 1 für ein Heim-oder Gebäudeautomationssystem dargestellt, wie sie aus dem Stand der Technik bekannt ist. Die Anordnung 1 weist ein leitergebundenes BUS-System 2 zur Kommunikation zwischen verschiedenen, im Folgenden genauer beschriebenen, Komponenten des Automationssystems auf. Das BUS-System 2 umfasst dabei einen Backbone 7, an welchen die verschiedenen Komponenten angeschlossen sind.

Die Anordnung 1 umfasst zwei Bedienelementen 3.1 und 3.2 zur Szenenauswahl, welche über jeweils eine Kopplungseinheit 6.1 bzw. 6.2 an das BUS-System 2 angeschlossen sind. Die Bedienelemente 3.1 oder 3.2 jeweils zusammen mit der zugehörigen Kopplungseinheit 6.1 bzw. 6.2 sind als Bedieneinheiten 14.1 bzw. 14.2 ausgeführt, welche an das BUS-System 2 angebunden sind.

Weiter umfasst die Anordnung 1 zwei weitere Bedienelemente 11.1 und 11.2 zur Betätigung von jeweils einem Verbraucher 4.1 bzw. 4.2 durch einen Benutzer. Die Bedienelemente 11.1 und 11.2 sind über Kopplungseinheiten 6.3 bzw. 6.5 an das BUS-System 2 angeschlossen. Die Bedienelemente 11.1 und 11.2 zusammen mit den zugehörigen Kopplungseinheiten 6.3 bzw. 6.5 sind jeweils als Bedieneinheit 13.1 bzw. 13.2 ausgeführt.

Die Verbraucher 4.1 und 4.2 sind elektrische Verbraucher und sind über jeweils einen Versorgungsanschluss 9.1 bzw. 9.2 an ein Stromversorgungsnetz 8 angeschlossen. Die Leistungsanschlüsse 9.1 und 9.2 weisen jeweils einen zwischengeschalteten Aktivator 10.1 bzw. 10.2 in Form von Stromreglern auf, welcher zur Steuerung über eine zugehörige Kopplungseinheit 6.4 bzw. 6.6 an das BUS-System 2 angebunden ist (Bei Verbrauchern, welche nicht elektrisch sind, wie beispielsweise ein Wasser- oder Gasverbraucher, umfasst ein möglicher Aktivator z. B. ein elektrisch regelbares Ventil). Die Stromregler 10.1 und 10.2 regeln den Stromfluss in den Leitungsanschlüssen 9.1 und 9.2 und sind zusammen mit den zugehörigen Kopplungseinheiten 6.4 und 6.6 jeweils als ein Steuerelement 12.1 und 12.2 im Sinne einer Schalt- bzw. Regeldose mit iokaier intelligenz und BUS-Schnittstelle ausgebildet. Die Steuerelemente 12.1 und 12.2 können damit direkt an das BUS-System 2 angeschlossen werden.

Die Verbraucher 4.1 und 4.2 sind hierbei Teil jeweils einer (nicht dargestellten) haustechnischen Einrichtung, wobei die haustechnischen Einrichtungen zur Regelung einer Aktivierung mit den Steuerelementen 12.1 und 12.2 versehen sind. Die Steuerelemente 12.1 und 12.2 können beispielsweise auch in die jeweiligen haushaltstechnischen Einrichtungen integriert sein oder extern als separate Einheit vorgesehen sein.

Die Kopplungseinheiten 6.1-6.6 weisen jeweils eine programmierbare integrierte Logikeinheit 5.1-5.6 auf, welche eine Programmierung mit einer lokalen Intelligenz ermöglicht. Zudem erfolgt die Anbindung der verschiedenen Komponenten wie Bedienelemente 3.1/2, 11.1/2 sowie Stromregler 10.1/2 an das BUS-System 2 über die Kopplungseinheiten 6.1-6.6. Die Kopplungseinheiten 6.1-6.6 dienen also einerseits der Kommunikation der Bedienelemente 3.1/2, 11.1/2 sowie des Stromreglers 10.1/2 und implementieren andererseits aufgrund der programmierten Logikeinheiten 5.1-5.6 eine Szenenlogik der Anordnung bzw. des Gebäudeautomationssystems.

Die Ansteuerung der Verbraucher 4.1 und 4.2 durch einen Benutzer über die Bedienelemente 11.1 und 11.2 erfolgt über die Kopplungseinheiten 6.3-6.6 sowie das BUS-System 2. Die Logikeinheiten 5.3-5.6 sind hierzu derart programmiert, dass eine Betätigung des Bedienelements 11.1 oder 11.2 über die Stromregler 10.1 und 10.2 eine entsprechende Änderung im Aktivierungszustand des jeweiligen Verbrauchers 4.1 bzw. 4.2 zur Folge hat. Wird beispielsweise die Bedieneinheit 11.1 zur Aktivierung des Verbrauchers 4.1 betätigt, so gibt die Kopplungseinheit 6.3 die entsprechende an die Kopplungseinheit 6.4 adressierte Anweisung auf das BUS-System 2. Die betroffene Kopplungseinheit 6.4 erkennt die Adressierung und entnimmt die zugehörige Information. Die Kopplungseinheit 6.4 interpretiert die Anweisung und betätigt den Stromregler 10.1 derart, dass die gewünschte Regelstellung eingestellt und der Verbraucher 4.1 entsprechend aktiviert oder gegebenenfalls deaktiviert ist.

Die Bedienelemente 3.1 und 3.2 dienen zur Auswahl bzw. Ansteuerung von zwei verschiedenen vorprogrammierten Szenen der Verbraucher 4.1 und 4.2. Hierzu ist die durch das Bedienelement 3.1 oder 3.2 aktivierbare Szene in der Logikeinheit 5.1 bzw. 5.2 der zugehörigen Kopplungseinheit 6.1 bzw. 6.2 abgespeichert. Bei Betätigung eines der Bedienelemente 3.1 oder 3.2 werden die entsprechenden gespeicherten Regelstellungen der Szene abgerufen und von den Kopplungseinheiten 6.1 bzw. 6.2 als entsprechende Anweisungen zur entsprechenden Regelung der Verbraucher 4.1 und 4.2 auf das BUS-System 2 gegeben. Von dort entnehmen und verwerten die adressierten Kopplungseinheiten 6.4 und 6.6 die Anweisungen und regeln die Verbraucher 4.1 und 4.2 entsprechend.

Figur 2 zeigt eine erfindungsgemässe Anordnung 20, welche teilweise der Anordnung 1 der Fig. 1 entspricht. Wie die Anordnung 1 weist die Anordnung 20 ebenfalls ein BUS-System 2 mit einem Backbone 7 auf.

Die Kopplungseinheiten 6.3-6.6 sowie die Bedienelemente 11.1-11.2 und die Verbraucher 4.1 und 4.2 sind im Wesentlichen wie in der Darstellung der Fig. 1 ausgeführt, wobei sich jedoch eine Programmierung der Logikeinheiten 5.3-5.6 von der Programmierung in der Anordnung 1 unterscheidet (siehe unten).

Im Gegensatz zur Anordnung 1 ist das BUS-System 2 in der Anordnung 20 an eine zentrale Kontrolleinheit 21 angebunden. Zudem entfallen die erfindungsgemäss nicht mehr erforderlichen Bedieneinheiten 14.1 und 14.2 zur Auswahl von vorprogrammierten Szenen.

In der Anordnung 20 ist hingegen ein weiterer Verbraucher 15 vorhanden, welcher über einen Versorgungsanschluss 9.3 an das Versorgungsnetz 8 angeschlossen ist. Der Versorgungsanschluss 9.3 wird von einem Aktivitätssensor 22 überwacht, welcher über eine weitere Kopplungseinheit 6.7 an das BUS-System 2 angebunden ist. Die Kopplungseinheit 6.7 weist eine integrierte Logikeinheit 5.7 auf, welche eine Programmierung der Kopplungseinheit 6.7 mit einer lokalen Intelligenz erlaubt. Der Aktivitätssensor 22 ist in der dargestellten Ausführungsform als Sensor 22 zur Messung eines elektrischen Stroms ausgebildet. Der Sensor 22 kann dabei z. B. in den Versorgungsanschluss 9.3 eingebracht werden oder den Leitungsanschluss z. B. von aussen umfassen. Hierbei können sämtliche bekannte, für eine Strommessung geeignete, Sensoren 22 zur Anwendung kommen. Der Sensor 22 zusammen mit der Kopplungseinheit 6.7 ist in einen Aktivitätsdetektor 23 zusammengefasst, welcher direkt an das BUS-System 2 angeschlossen werden kann.

Die Logikeinheiten 5.3-5.7 der Kopplungseinheiten 6.3 bis 6.7 sind derart programmiert, dass die damit erreichte lokale Intelligenz im Wesentlichen auf die Übermittlung von Ereignissen der Bedienelemente, Aktivatoren, Sensoren oder anderer denkbarer Komponenten bzw. eine Übermittlung von Anweisungen der Kontrolleinheit an dieselben beschränkt ist. Die Kopplungseinheiten 6.3-6.6 weisen damit gegenüber den entsprechenden Programmierungen in der Anordnung 1 der Fig. 1 eine reduzierte lokale Intelligenz auf und sind nicht mehr wesentlich an der Implementierung der Szenenlogik beteiligt. Die Regelstellungen für verschiedene Szenen der Verbraucher 4.1 und 4.2 sind in der zentralen Kontrolleinheit 21 gespeichert und werden bei Bedarf auch von dieser abgerufen. Die Anweisungen zur Aktivierung von Szenen-Regelstellungen erfolgen ebenfalls durch die Kontrolleinheit 21. D. h. die gesamte Szenenlogik der Anordnung 20 ist damit erfindungsgemäss in der Kontrolleinheit 21 implementiert und somit zentralisiert.

Die direkte Ansteuerung der Verbraucher 4.1 und 4.2 durch die Bedienelemente 11.1 und 11.2 erfolgt bei der Anordnung 20 im Gegensatz zur Anordnung 1 über die Kontrolleinheit 21. Die Bedieneinheiten 13.1 und 13.2 übermitteln eine Betätigung der Bedienelemente 11.1 bzw. 11.2 an die Kontrolleinheit 21, welche darauf hin die entsprechenden Anweisungen an die Steuerelemente 12.1 bzw. 12.2 übermittelt. Es ist hierbei aber auch denkbar, dass eine lokale Intelligenz der Koppeleinheiten 6.3-6.6 beibehalten wird, welche dieselbe direkte Ansteuerung wie bei der Anordnung 1 ermöglicht, d. h. ohne eine Beteiligung der zentralen Kontrolleinheit.

Im Gegensatz zu der Anordnung 1 der Fig. 1 erfolgt die Auswahl einer Szene bei der Anordnung 20 nicht mehr durch manuelle Auswahl über ein entsprechendes Bedienelement. Erfindungsgemäss wird eine gespeicherte Szene erkannt bzw. ausgewählt, indem wenigstens ein für die Szene typischer Verbraucher in einen szenentypischen Aktivierungszustand gebracht wird.

In der Anordnung 20 bildet der Verbraucher 15, welcher vom Aktivitätsdetektor 23 überwacht wird, einen typischen Verbraucher 15 einer in der zentralen Kontrolleinheit 21 gespeicherten Szene. Wird der typische Verbraucher 15 in den szenentypischen Aktivierungszustand gebracht, meldet der Sensor 22 den entsprechenden Aktivierungszustand an die Kopplungseinheit 6.7, welche über das BUS-System 2 eine entsprechende Meldung an die Kontrolleinheit 21 übermittelt. Die zentrale Kontrolleinheit 21 erkennt, dass der aktivierte Verbraucher 15 typisch für eine abgespeicherte Szene ist und dass der typische Verbraucher in einen szenentypischen Aktivierungszustand gebracht wurde. Die zentrale Kontrolleinheit 21 ruft in der Folge die zugehörigen gespeicherten Szeneneinstellungen ab. Aufgrund der gespeicherten Szeneneinstellungen (d. h. Regelstellungen der Szene) übermittelt die Kontrolleinheit 21 über das BUS-System 2 entsprechende Anweisungen an die Kopplungseinheiten 6.4 und 6.6. Die Kopplungseinheiten 6.4 und 6.6 veranlassen über die Stromregler 10.1 und 10.2 entsprechend den Anweisungen die Regelung der Verbraucher 4.1 und 4.2 gemäss der gewählten Szene.

Die Aktivierung der Szeneneinstellungen erfolgt somit ohne direkte Interaktion eines Benutzers mit dem Heim- bzw. Gebäudeautomationssystem, sondern über den Übergang des szenentypischen Verbrauchers 15 in den szenentypischen Aktivierungszustand.

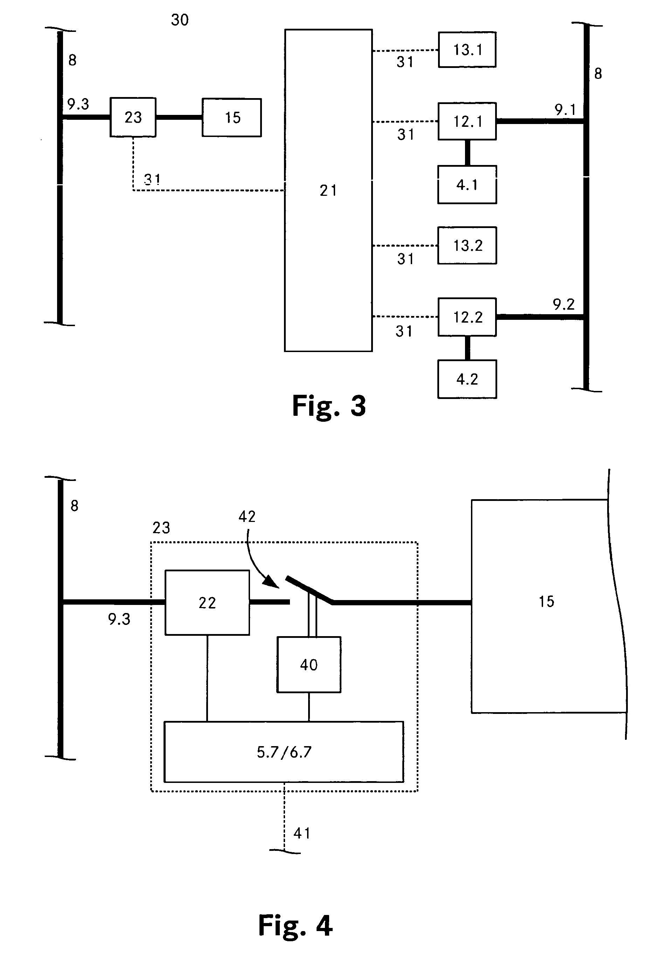

Figur 3 zeigt ebenfalls eine erfindungsgemässe Anordnung 30, welche weitgehend der in Fig. 2 dargestellten Anordnung 20 der Fig. 2 entspricht.

Im Gegensatz zu Fig. 2 ist jedoch das BUS-Kommunikationssystem 2 durch ein Funkkommunikationssystem 31 ersetzt. Die Bedieneinheiten 13.1 und 13.2, sowie die Steuerelemente 12.1 und 12.2 und der Aktivitätsdetektor 23 kommunizieren in der Anordnung 30 über das Funksystem 31 direkt mir der zentralen Kontrolleinheit 21. Kopplungseinheiten 6.3 bis 6.7 sowie die zugehörigen Logikeinheiten 5.3-5.7 sind in der Darstellung der Fig. 3 in die Komponenten 12.1-12.2, 13.1-13.2 sowie 23 integriert und nicht mehr gesondert dargestellt. Zur Anbindung an das Funksystem 31 weisen die in die Komponenten 12.1/2, 13.1/2 sowie 23 integrierten Kopplungseinheiten 6.3-6.7 die entsprechenden Sende-und/oder Empfangsmittel auf. Die zugehörigen Logikeinheiten 5.3-5.7 sind dabei wie bei Anordnung 20 derart programmiert, dass die Komponenten 12.1 /2, 13.1/2 sowie 23 eine für die Übermittlung von Ereignissen sowie für die Entgegennahme von Anweisungen der Kontrolleinheit 21 erforderliche lokale Intelligenz aufweisen.

Die Meldungen der Komponenten 12.1/2, 13.1/2 sowie 23 an die zentrale Kontrolleinheit 21 sowie Anweisungen der Kontrolleinheit 21 an die Komponenten 12.1/2, 13.1/2 sowie 23 erfolgen über das Funksystem 31. Die Erkennung einer Aktivierungsänderung bzw. einer szenentypischen Aktivierung des typischen Verbrauchers 15 sowie die damit ausgelöste Szenenwahl erfolgt analog zu der Anordnung 20 der Fig. 2 mit dem Unterschied der drahtlosen Funkübermittlung.

Figur 4 zeigt eine schematische Detailansicht eine Aktivitätsdetektors 23 wie er z. B. in der Anordnung 20 oder 30 zur Überwachung des Verbrauchers 15 zur Anwendung kommt.

Der Aktivitätsdetektor 23 umfasst den Aktivitätssensor 22 sowie die Kopplungseinheit 6.7 mit integrierter Logikeinheit 5.7. Der Aktivitätsdetektor 23 ist über die Kopplungseinheit 6.7 an ein Kommunikationssystem 41 angebunden, welches beispielsweise dem BUS-System 2 der Fig. 2 oder dem Funksystem 31 der Fig.3 entspricht. Der Aktivitätsdetektor 23 überwacht den Versorgungsanschluss 9.3, mit welchem der Verbraucher 15 an das Versorgungsnetz 8 angeschlossen ist.

In der Ausführungsform der Fig. 4 ist der Aktivitätsdetektor 23 gemäss einer bevorzugten Ausführungsform der Erfindung mit einem Leistungsschalter in Form eines Stromunterbrechers 40 ergänzt. Der Stromunterbrecher 40 ist an die Kopplungseinheit 6.7 angeschlossen und derart ausgeführt, dass er eine Leistungs- bzw. Stromversorgung über den Versorgungsanschluss 9.3 an den Verbraucher 15 unterbrechen kann 42.

Ist die Logikeinheit 5.7 der Kopplungseinheit 6.7 entsprechend programmiert, so kann der Aktivitätsdetektor 23 bei einer vorgegebenen oder von der Logikeinheit 5.7 erlernten Zeitdauer der Nichtaktivierung des Verbrauchers 15 diesen selbstständig vom Versorgungsnetz trennen, um beispielsweise einen unnötigen Standby-Betrieb des Verbrauchers 15 zu unterbinden. Es ist aber auch denkbar, dass der Aktivitätssensor 22 die Nichtaktivität über die Kopplungseinheit 6.7 an die zentrale Kontrolleinheit 21 meldet und diese gegebenenfalls eine Anweisung an den Stromunterbrecher 40 sendet, welche von der Kopplungseinheit 6.7 empfangen und an den Stromunterbrecher 40 weitergegeben wird. Der Stromunterbrecher 40 unterbricht bzw. stellt wieder gemäss Anweisung eine Leistungsversorgung des Verbrauchers 15 her. Eine Wiederherstellung der Leistungsversorgung nach einer Trennung vom Versorgungsnetz kann beispielsweise auch über ein (nicht dargestelltes) zusätzliches Bedienelement bzw. eine Bedieneinheit ausgelöst werden.

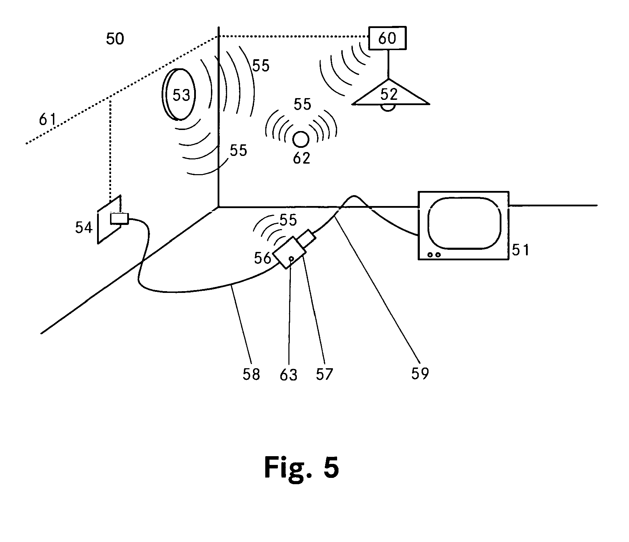

Fig. 5 zeigt eine mögliche Ausführung einer erfindungsgemässen Anordnung 50 mit einem TV-Gerät 51, einer haustechnischen Einrichtung umfassend eine Lichtquelle 52, einer zentralen Kontrolleinheit 53 und einem Wandanschluss 54 eines elektrischen Versorgungsnetzes 61. Die zentrale Kontrolleinheit 53 kommuniziert über ein Funksystem 55 mit einem Steuerelement 60, z. B. einer Schaltdose, der Lichtquelle 52 sowie einem Aktivitätsdetektor 56 zur Überwachung des TV-Geräts 51.

Die zentrale Kontrolleinheit 53 ist in der dargestellten Ausführung als wandmontierte Einheit ausgebildet. Der Aktivitätsdetektor 56 ist als Zwischenstecker 57 ausgebildet, welcher über ein Anschlusskabel 58 mit dem Wandanschluss 54 des Versorgungsnetzes 61 verbunden ist. Das TV-Gerät 51 ist mit einem zugehörigen Anschlusskabel 59 an den als Zwischenstecker 57 ausgebildeten Aktivitätsdetektor 56 angeschlossen.

Eine in der Kontrolleinheit 53 gespeicherte Szene "Fernsehen" des Gebäudeautomationssystems der Anordnung 50 umfasst somit als typischen Verbraucher das TV-Gerät 51 sowie eine zugehörige Aktivierungseinstellung der Lichtquelle 52. Es ist z. B. denkbar, dass für die Szene "Fernsehen" die Aktivierung der Lichtquelle 52 einen vorgegebenen z. B. abgedunkelten Wert haben soll. Bei einer Aktivierung des TV-Geräts 51 misst der Aktivitätsdetektor 56 einen Anstieg der aufgenommenen Leistung des TV-Geräts 51 bzw. einen Strom, welcher die Leitung 59 durchfliesst. Der Aktivitätsdetektor 56 sendet über das Funksystem 55 die Information über das Aktivierungsereignis an die Kontrolleinheit 53. Diese erkennt das aktivierte TV-Gerät 51 als typischen Verbraucher und den zugehörigen Aktivierungszustand "aktiviert" als szenentypisch für die Szene "Fernsehen" und ruft die entsprechenden abgespeicherten Regelstellungen für das Steuerelement 60 ab. Die Kontrolleinheit 53 sendet über das Funksystem 55 entsprechende Anweisungen zur Aktivierung an das Steuerelement 60 der Lichtquelle 52, welche die gewünschte Einstellung der Aktivierung der Lichtquelle 52 umsetzt.

Ist der Benutzer mit dem Aktivierungszustand der Lichtquelle 52 nicht zufrieden, kann er die Einstellung z. B. über ein über das Funksystem 55 angebundenes wandmontiertes Bedienelement 62 oder direkt über Bedienelemente der Kontrolleinheit 53 ändern. Das Bedienelement 62 veranlasst das Steuerelement 60 entweder direkt oder über die Kontrolleinheit 53 (Meldung der Benutzereingabe an Kontrolleinheit 53, Kontrolleinheit weist Steuerelement 60 an), die Regelstellung des Steuerelements 60 der Lichtquelle 52 gemäss Wunsch des Benutzers anzupassen. In jedem Fall wird die neue Einstellung an die Kontrolleinheit 53 übermittelt, welche die neue Regelstellung registriert. Aufgrund des aktivierten TV-Geräts 51 erkennt die Kontrolleinheit 53, dass die neue Regelstellung zur Szene "Fernsehen" gehört. Der typische Verbraucher "TV-Gerät 51" bildet somit eine Referenz für die Einstellungen der Szene "Fernsehen". Die Kontrolleinheit 53 übernimmt die neue Einstellung nicht identisch. Vielmehr wird erst bei mehrmaligem Nachjustieren der Einstellungen durch den Benutzer die neue Einstellung erlernt, da erst dann eine hinreichende Signifikanz der neuen Regelstellung gewährleistet ist. Eine entsprechende lernfähige Kontrolleinheit ist beispielsweise in der EP 0 900 417 B1 (HTS High Technology Systems AG) beschrieben. Der Benutzer kann selbstverständlich jederzeit die gespeicherten bzw. erlernten Regelstellungen der Kontrolleinheit 53 überstimmen und ein Abspeichern der manuell gewählten Einstellung erzwingen.

Wird das TV-Gerät 51 wieder ausgeschaltet, so setzt der Aktivitätsdetektor 56 die Kontrolleinheit 53 von diesem Deaktivierungsereignis in Kenntnis. Die Kontrolleinheit 53 veranlasst dann eine Regelstellung der Lichtquelle 52 bzw. des Steuerelements 60 gemäss z. B. einer Standardszene oder einer vor der Auswahl der Szene "Fernsehen" eingestellten Aktivierung.

Bleibt das TV-Gerät 51 längere Zeit inaktiv, so veranlasst der Aktivitätsdetektor 56 selbstständig oder über die Kontrolleinheit 53 eine Betätigung eines in den Aktivitätsdetektor 56 integrierten Stromunterbrechers (siehe Fig. 4), welcher das TV-Gerät 51 von dem Versorgungsnetz 61 trennt. Eine Aufhebung der Trennung vom Versorgungsnetz 61 ist z. B. manuell über ein Bedienelement 63 am Aktivitätsdetektor 56 oder aber auch über das Bedienelement 62 oder die Kontrolleinheit 53 möglich. Hierbei sind auch Ausführungen möglich, welche eine gewünschte Reaktivierung des TV-Geräts 51 aufgrund einer Benutzerhandlung (z. B. Betätigung einer Fernbedienung) erkennen und daraufhin die Stromunterbrechung des Aktivitätsdetektors 56 aufheben. Es versteht sich, dass beliebige weitere haustechnische Einrichtungen über das Funksystem 55 an die Kontrolleinheit 53 angebunden werden können. Insbesondere können auch beliebige weitere Verbraucher vorgesehen sein, welchen zur Überwachung einer Aktivität weitere Aktivitätsdetektoren zugeordnet sind. Die überwachten Verbraucher können dann als szenentypische Verbraucher definiert werden.

Zusammenfassend ist festzustellen, dass das erfindungsgemässe Verfahren zur Steuerung von haustechnischen Einrichtungen, welche zur Regelung einer Aktivierung jeweils mit einem Steuerelement versehen sind, sowie die erfindungsgemässe Anordnung zur Durchführung des Verfahrens eine Auswahl von abgespeicherten Szenen für den Benutzer komfortabel gestaltet und vereinfacht. Insbesondere wird die Szenenwahl vollständig automatisiert, so dass für die Auswahl einer passenden Szene keine direkte Interaktion des Benutzers mehr erforderlich ist. Alleine aufgrund der Aktivierung eines für eine Szene typischen Verbrauchers wird ein automatisches Abrufen und Einstellen von gespeicherten Szeneneinstellungen ausgelöst.

Die Programmierung und die damit verbundene lokale Intelligenz der Kopplungseinheiten bzw. der gesamten Komponenten wie z. B. Steuerelemente oder Bedieneinheiten hängt von der konkreten Ausführung einer erfindungsgemässen Anordnung bzw. von dem spezifischen angewandten Verfahren ab. Je nach Ausführung ist eine höhere bzw. geringere Intelligenz erforderlich. Aufgrund der programmierbaren Logikeinheiten können die Komponenten den Erfordernissen jedoch frei angepasst werden. Somit ist es möglich, im Bedarfsfall einzelne Komponenten einer erfindungsgemässen Anordnung, z. B. Aktivitätsdetektoren, mit einer grösseren lokalen Intelligenz zu versehen, als andere Komponenten wie z. B. Bedienelemente.

## Patentansprüche

1. Verfahren zur Steuerung von haustechnischen Einrichtungen, welche zur Regelung einer Aktivierung jeweils mit einem Steuerelement (12.1, 60) versehen sind, wobei eine oder mehrere der haustechnischen Einrichtungen an ein Versorgungsnetz (8, 61) angeschlossene Verbraucher (4.1, 15, 51, 52) umfassen und von einem Benutzer gewählte Regelstellungen der Steuerelemente (12.1, 60) der haustechnischen Einrichtungen von einer zentralen Kontrolleinheit (21, 53) registriert bzw. erlernt und als Szene gespeichert werden, die Regelstellungen bei Bedarf wieder abgerufen und die Steuerelemente (12.1, 60) entsprechend geregelt werden, **gekennzeichnet durch**
a) eine Überwachung von Aktivierungszuständen eines oder mehrerer der Verbraucher (15, 51) **durch** jeweils einen Aktivitätsdetektor (23, 56);
b) eine Zuordnung von szenentypischen Aktivierungszuständen von einem oder mehreren überwachten szenentypischen Verbrauchern zu einer gespeicherten Szene; wobei
c) bei einer Detektierung der szenentypischen Aktivierungszustände der szenentypischen Verbraucher die zur Szene gehörigen gespeicherten Regelstellungen automatisch abgerufen und die betroffenen Steuerelemente (12.1, 60) der haustechnischen Einrichtungen entsprechend geregelt werden.

2. Verfahren nach Anspruch 1, **dadurch gekennzeichnet, dass** der gespeicherten Szene genau ein typischer Verbraucher mit zugehörigem szenentypischem Aktivierungszustand zugeordnet wird.

3. Verfahren nach Anspruch 1 oder 2, **dadurch gekennzeichnet, dass** der gespeicherten Szene die typischen Verbraucher mit zugehörigen szenentypischen Aktivierungszuständen manuell zugeordnet werden.

4. Verfahren nach einem der Ansprüche 1 bis 3, **dadurch gekennzeichnet, dass** im Wesentlichen jeder gespeicherten Szene, insbesondere jeder wählbaren gespeicherten Szene, ein oder mehrere typische Verbraucher mit szenentypischen Aktivierungszuständen zugeordnet werden.

5. Verfahren nach einem der Ansprüche 1 bis 4, **dadurch gekennzeichnet, dass** die überwachten Verbraucher elektrische Verbraucher (51, 52) umfassen und die Überwachung durch Messung einer Leistungsaufnahme der elektrischen Verbraucher (51, 52) erfolgt.

6. Verfahren nach einem der Ansprüche 1 bis 5, **dadurch gekennzeichnet, dass** in einem weiteren Schritt bei Nichtaktivierung eines überwachten Verbrauchers (15, 51) über einen durch einen Benutzer vorgebbaren oder registrierten bzw. erlernten Zeitraum der Verbraucher (15, 51) vom Versorgungsnetz (8, 61) getrennt wird.

7. Anordnung (50) für ein Heim- und Gebäudeautomationssystem, insbesondere zur Durchführung eines Verfahrens nach einem der Ansprüche 1 bis 6, umfassend eine Kontrolleinheit (21, 53), ein Kommunikationssystem (41, 55) und haustechnische Einrichtungen, wobei die haustechnischen Einrichtungen zur gesteuerten Aktivierung mit Steuerelementen (12.1, 60) versehen sind und eine oder mehrere der haustechnischen Einrichtungen an ein Versorgungsnetz (8,61) angeschlossene Verbraucher (4.1, 15, 51, 52) aufweisen, die Steuerelemente (12.1, 60) über das Kommunikationssystem (41, 55) an die Kontrolleinheit (21, 53) angebunden sind, wobei die Kontrolleinheit (21, 53), das Kommunikationssystem (41, 55) und die Einrichtungen derart ausgebildet sind und zusammenwirken, dass die Kontrolleinheit (21, 53) von einem Benutzer gewählte Regelstellungen der Steuerelemente (12.1, 60) der haustechnischen Einrichtungen registrieren bzw. erlernen und als Szene speichern kann, so dass die Regelstellungen bei Bedarf wieder abgerufen und die Steuerelemente (12.1, 60) der haustechnischen Einrichtungen entsprechend geregelt werden können, **dadurch gekennzeichnet, dass** einem oder mehreren der Verbraucher zur Überwachung eines Aktivierungszustandes des Verbrauchers (15, 51) jeweils ein über das Kommunikationssystem (41, 55) an die Kontrolleinheit (21, 53) angebundener Aktivitätsdetektor (23, 56) zugeordnet ist.

8. Anordnung nach Anspruch 7, **dadurch gekennzeichnet, dass** die Kontrolleinheit (21, 53) derart ausgebildet ist, dass bei einer Änderungen der Aktivierungszustände der überwachten Verbraucher (15, 51) automatisch festgestellt wird, ob die geänderten Aktivierungszustände szenentypischen Aktivierungszuständen typischer Verbraucher einer gespeicherten Szene entsprechen und gegebenenfalls automatisch die gespeicherten Regelstellungen der entsprechenden Szene abgerufen und über das Kommunikationssystem (41, 55) die Steuerelemente (12.1, 60) der haustechnischen Einrichtungen entsprechend geregelt werden.

9. Anordnung nach einem der Ansprüche 7 bis 8, **dadurch gekennzeichnet, dass** die überwachten Verbraucher (15, 51) elektrische Verbraucher (51) umfassen und die Aktivitätsdetektoren (23, 56) zur Überwachung eine Leistungsaufnahme bzw. einen aufgenommenen Strom der elektrischen Verbraucher (51) messen.

10. Anordnung nach einem der Ansprüche 7 bis 9, **dadurch gekennzeichnet, dass** der Aktivitätsdetektor (56) derart ausgebildet ist, dass er zwischen einem Anschluss des Versorgungsnetzes (61) und dem Verbraucher (51) installiert werden kann.

11. Anordnung nach einem der Ansprüche 7 bis 10, **dadurch gekennzeichnet, dass** die Aktivitätsdetektoren (23) programmierbare integrierte Logikeinheiten (5.7) aufweisen.

12. Anordnung nach einem der Ansprüche 7 bis 11, **dadurch gekennzeichnet, dass** der Aktivitätsdetektor (23) zusätzlich mit einem Schalter (42) versehen ist, welcher den überwachten Verbraucher (15) vom Versorgungsnetzwerk (8) trennen kann.
